# EUROPÄISCHE PATENTSCHRIFT

(11) **EP 2 455 183 B1**
(45) Veröffentlichungstag und Bekanntmachung des Hinweises auf die Patenterteilung: **13.08.2014**
(21) Anmeldenummer: 11189853.2
(22) Anmeldetag: 18.11.2011
(51) Int. Cl.: B23Q 3/155, B23Q 11/08

(54) **Werkzeugmaschine zur Bearbeitung eines Werkstücks**
Tool machine for processing a workpiece
Machine-outil destinée au traitement d'une pièce usinée

(30) Priorität: 18.11.2010 AT 19212010
(43) Veröffentlichungstag der Anmeldung: 23.05.2012
(73) Patentinhaber: WFL Millturn Technologies GmbH & Co. KG, 4030 Linz (AT)
(72) Erfinder: Maringer, Herbert Ing., 4626 Sattledt (AT)
(74) Vertreter: Jell, Friedrich

(56) Entgegenhaltungen:
- EP-A1- 1 413 392
- DE-U1- 9 305 653

## Beschreibung

Die Erfindung betrifft eine Werkzeugmaschine zur Bearbeitung eines Werkstücks mit einer Schlittenführung, mit einem an der Schlittenführung geführten Schlitten, der einen Werkzeughalter zur Aufnahme eines Werkzeugs für die Bearbeitung des Werkstücks aufweist, mit einem Werkzeugwechsler zum Ein- bzw. Auswechseln von Werkzeugen am Werkzeughalter und mit einem zur wenigstens teilweisen Aufnahme des zu bearbeitenden Werkstücks vorgesehenen Arbeitsraum, der wenigstens teilweise von einer schmutzdichten Abtrennung begrenzt wird, wobei die Abtrennung für ein Ein- bzw. Auswechseln von Werkzeugen von einer Schließ- in eine Offenstellung verschiebbar gelagert ist (siehe z.B. DE-9305653-U).

Um die im Arbeitsraum einer Werkzeugmaschine entstehende und insbesondere durch die Werkstückbearbeitung bedingte Verschmutzung eingrenzen zu können, ist es aus dem Stand der Technik bekannt (DE19608625 A1, EP0333699 A1), den Arbeitsraum mit einer Abtrennung zu begrenzen.

Weiter ist es bekannt (EP1413392A1), solche Abtrennungen zumindest zum Ein- bzw. Auswechseln von Werkzeugen öffenbar auszubilden, um einem Werkzeugwechsler zu gestatten, einem Werkzeughalter eines Schlittens Werkzeuge zuzuführen. Zu diesem Zweck ist es bekannt, die entlang einer Führung verschiebbar gelagerte Abtrennung vom Schlitten wegzuschieben, um damit einen Spalt für das Ein- bzw. Auswechseln von Werkzeugen zu öffnen. Von Nachteil bei derartigen Konstruktionen ist deren hoher Konstruktionsaufwand, insbesondere im Bereich des Schlittens, der für eine freie Anstellung seines Werkzeughalters im Arbeitsraum besondere konstruktive Maßnahmen im Hinblick auf die Führung der Abtrennung fordert. Hinzu kommt, dass gerade hier ein dichter Abschluss der Abtrennung wichtig ist, weil dort mit einer erhöhten Verschmutzungsgefahr aufgrund von anfallenden Spänen, Kühlmittel etc. zu rechnen ist. Bekannte Führungen von Abtrennungen können solch einen standfesten Abschluss nicht gewährleisten.

Es ist daher Aufgabe der Erfindung, eine Werkzeugmaschine der eingangs geschilderten Art derart in der Abtrennung konstruktiv zu verbessern, dass damit nicht nur eine dichte Abtrennung sichergestellt, sondern auch einfache Konstruktionsverhältnisse geschaffen werden können.

Die Erfindung löst die gestellte Aufgabe dadurch, dass die Abtrennung zum Einnehmen seiner Schließ- oder Offenstellung an der Schlittenführung verschiebbar gelagert ist.

Ist die Abtrennung zum Einnehmen seiner Schließ- oder Offenstellung an der Schlittenführung verschiebbar gelagert, so kann zunächst zur Schaffung einfacher Konstruktionsverhältnisse die bestehende Führung für den Schlitten mitgenutzt werden, um die Abtrennung verschiebbar zu lagern. Weiter kann damit auch ermöglicht werden, dass die Abtrennung im Bereich des Schlittens einen dichten Abschluss sicherstellen kann, weil über die gemeinsame Führung mit dem Schlitten dessen Bewegungen äußerst genau gefolgt werden kann. Dabei ist es nicht entscheidend, ob die Abtrennung am Schlitten anschließt, oder alternativ diesen hintergreift. Durch die gemeinsame Führung mit dem Schlitten ist nämlich auf einfache Weise ermöglicht, dass die Abtrennung auch im Bereich des Schlittens eine besonders dichte Lage einnehmen kann. Die erfindungsgemäße Lagerung der Abtrennung an der Schlittenführung ermöglicht daher nicht nur eine konstruktive Einfachheit und damit eine kostengünstige Werkzeugmaschine, sondern kann auch für eine standfeste Abtrennung des Arbeitsraums, insbesondere gegenüber einem Schmutzaustritt, sorgen. Einfache Konstruktionsverhältnisse können sich ergeben, wenn die Abtrennung auf der dem Arbeitsraum nächsten Führung der Schlittenführung verschiebbar gelagert ist. Damit kann außerdem auf einfache Weise die Schlittenführung gegenüber Verschmutzungen geschützt werden, beispielsweise indem die Abdeckung die Schlittenführung wenigstens teilweise gegenüber dem Arbeitsraum abdeckt.

Um einen besonders standfesten Schutz der Werkzeugmaschine gegenüber Verschmutzungen zu schaffen, kann vorgesehen sein, dass die Abtrennung in ihrer Schließstellung wenigstens teilweise am Schlitten anschließt. Zum Zwecke des Anschließens ist beispielsweise vorstellbar, die Abdeckung an die Seitenflächen des Schlittens anstoßen zu lassen, wobei eventuell auch eine Dichtung zwischen Abdeckung und Schlitten vorgesehen sein kann. Verschmutzungen können dann nämlich nicht in den Bereich des Arbeitsraums zwischen Schlitten und Abtrennung eindringen, was außerdem eine Gefahr der Beeinträchtigung der Führungsmittel des Schlittens reduzieren kann. Außerdem kann so die Schlittenkonstruktion zum Zwecke der Abtrennung miteinbezogen werden, was den Konstruktions- sowie Materialaufwand für die Abtrennung verringern kann.

Die Werkzeugmaschine kann noch weiter konstruktiv vereinfacht werden, wenn die Abtrennung am Schlitten über ein längenverstellbares Kopplungsteil befestigt ist. Über das Kopplungsteil kann so je nach Längenverstellung die Abtrennung gegenüber dem Schlitten in eine Schließ- oder Offenstellung gebracht werden, damit über den Werkzeugwechsler ein Ein- bzw. Auswechseln des Werkzeugs vorgenommen werden kann.

Verbesserungen in der konstruktiven Einfachheit der Werkzeugmaschine können sich weiter einstellen, wenn das Kopplungsteil als Zylinder ausgeführt ist, wobei das Zylindergehäuse am Schlitten und die Kolbenstange an der Abtrennung befestigt sind.

Weist die Abtrennung mehrere teleskopartig zusammenhängende Abtrennplatten auf, dann kann die Abtrennung selbst hohen Anforderungen an die Verstellbarkeit des Schlittens genügen, ohne ein unerwünschtes Öffnen der Abtrennung befürchten zu müssen. Konstruktiv einfach kann wenigstens die dem Schlitten nächste Abtrennplatte in der Schlittenführung eingehängt verschiebbar gelagert sein, um damit für eine konstruktiv einfache sowie ausreichende Abstützung der Abtrennung zu sorgen.

Eine besonders dichte Abtrennung kann geschaffen werden, wenn die wenigstens zweigeteilte Abtrennung beiderseits des Schlittens verschiebbar gelagert ist. Insbesondere kann damit auch ein dichtes Umfassen des Schlittens gewährleistet werden, was zu einer besonders sicheren Abtrennung des Arbeitsraums führen kann.

In den Figuren ist beispielsweise der Erfindungsgegenstand anhand eines Ausführungsbeispiels näher dargestellt. Es zeigen
- Fig. 1: die Werkzeugmaschine in einer teilweise abgerissene Schnittansicht nach 1-1 der Fig. 2 und
- Fig. 2: eine Draufsicht auf die nach Fig. 1 dargestellte Werkzeugmaschine.

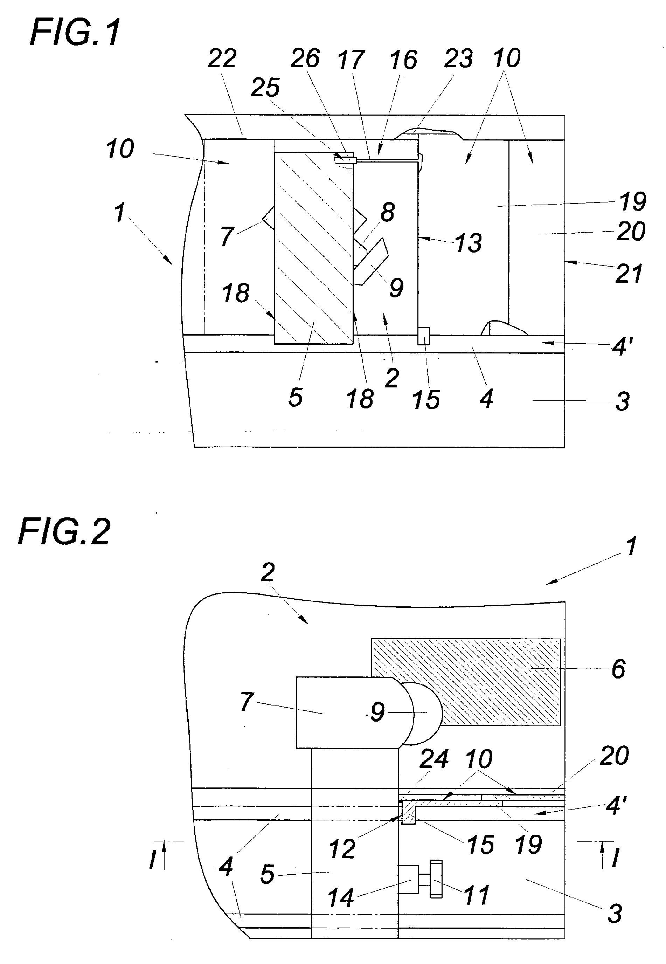

Beispielsweise wird nach Fig. 1 eine Werkzeugmaschine 1 in einer Ansicht auf den Arbeitsraum 2 geoffenbart, wobei diese Werkzeugmaschine 1 der Übersichtlichkeit halber einer teilweise abgerissen Schnittansicht nach 1-1 der Fig. 2 dargestellt ist. Die Werkzeugmaschine 1 weist eine am Maschinenbett 3 vorgesehene lineare Schlittenführung 4 auf, entlang der ein Schlitten 5 verschiebbar gelagert ist, um in Längsrichtung der Werkzeugmaschine 1 jegliche Position eines im Arbeitsraum 2 vorgesehenen Werkstücks 6 anfahren zu können. Am Schlitten 5 ist ein Werkzeughalter 7 vorgesehen, der eine Aufnahme 8 zum Ein- und Auswechseln eines Werkzeugs 9 aufweist. Mit Hilfe des Werkzeugs 9 kann nun das Werkstück 6 bearbeitetet werden. Bekanntermaßen besteht gerade im Bereich der Werkstückbearbeitung eine vergleichsweise hohe Verschmutzungsgefahr. Zu diesem Zweck wird der Arbeitsraum 2 wenigstens teilweise von einer Abtrennung 10 begrenzt. Diese Abtrennung 10 muss jedoch insbesondere im Bereich des Schlittens 5 bzw. des Werkzeughalters 7 öffenbar ausgebildet sein, damit in den Werkzeughalter 7 ein anderes Werkzeug 11 eingewechselt bzw. das Werkzeug 9 ausgewechselt oder auch entnommen werden kann. Die Abtrennung 10 ist daher derart verschiebbar gelagert, dass diese für das Ein- bzw. Auswechseln von Werkzeugen 9, 11 von einer Schließstellung 12, wie nach Fig. 2 dargestellt, in eine Offenstellung 13, wie nach Fig. 1 dargestellt, gebracht werden kann. Für das Ein- und Auswechseln der Werkzeuge 9 und 11 ist ein Werkzeugwechsler 14 vorgesehen, wie dieser beispielsweise in der Fig. 2 erkannt werden kann. Befindet sich nun die Abtrennung 10 in seiner Offenstellung 13, dann kann der Werkzeugwechsler 14 mit seinem Werkzeug 11 in den Arbeitsraum 2 vorrücken und das Werkzeug 9 dem Werkzeughalter 7 auswechseln bzw. das Werkzeug 11 dort einwechseln. Mit diesem neuen Werkzeug 11 kann dann die Bearbeitung der Werkstücks 6 weiter fortgesetzt werden. Um Verschmutzungen im Bereich des Maschinenbetts 3 bzw. im Bereich der Schlittenführung 4 zu vermeiden, wird die Bearbeitung des Werkstücks 6 bei geschlossener Abtrennung 10 durchgeführt. Um einen besonders genauen Anschluss der Abtrennung 10 an den Schlitten 5 zu ermöglichen, ist die Abtrennung 10 zum Einnehmen seiner Schließ- oder Offenstellung 12, 13 an der Schlittenführung 4 verschiebbar gelagert, nämlich auf der dem Arbeitsraum 2 am nächsten liegenden Führung 4' der Schlittenführung 4. Damit kann nicht nur - für eine konstruktive Einfachheit - die Schlittenführung 4 zur Führung der Abtrennung 10 genutzt werden, sondern es kann auch auf einfache Weise sichergestellt werden, dass die Abtrennung 10 den Bewegungen des Schlittens 5 nachführbar ist, was einen dichten Anschluss bzw. Abschluss für eine standfeste Abtrennung ermöglichen kann. Wie beispielsweise in Fig. 1 und 2 erkannt werden kann, ist die Abtrennung 10 über einen Bügel 15 in die Schlittenführung 4 eingehängt, so dass diese Abtrennung 10 entlang der Schlittenführung 4 gleichwie der Schlitten 5 linear verschoben werden kann.

Außerdem kann durch die vom Schlitten 5 wegbewegbare Abtrennung 10 auch auf eine aus dem Stand der Technik bekannte Wechseltür verzichtet werden, da die Abtrennung 10 die Funktion der Wechseltür zum Ein- und Auswechseln von Werkzeugen 9 und 11 übernehmen kann. Neben dem Vorteil, damit die Baulänge der Werkzeugmaschine 1 zu reduzieren, können damit auch verminderte Herstellungskosten ermöglicht werden. Die Abtrennung 10 ist zur Schlittenführung 4 gegenüber dem Arbeitsraum 2 wenigstens teilweise abdeckend vorgesehen, um damit die Schlittenführung 4 gegenüber Verschmutzungen auf einfache Weise mit zu schützen.

Einfache Handhabungsverhältnisse zur Schaffung der Schließ- oder Offenstellung 12, 13 ergeben sich, wenn die Abtrennung 10 am Schlitten 5 über ein längenverstellbares Kopplungsteil 16 befestigt ist, was der Fig. 1 entnommen werden kann. Dieses als Zylinder 25 ausgeführte Kopplungsteil 16 kann so über die Linearverschiebung seiner Kolbenstange 17 auf einfache Weise den Abstand zwischen Abtrennung 10 und Schlitten 5 einstellen. Zu diesem Zweck ist das Zylindergehäuse 26 des Zylinders 25 mit dem Schlitten 5 und die Kolbenstange 17 des Zylinders 25 mit der Abtrennung 10 fest verbunden. Insbesondere kann jedoch das Kopplungsteil 16 dafür sorgen, dass die Abtrennung 10 stets mit dem Schlitten 4 mitgeführt wird, so dass für eine Bewegung der Abtrennung 10 zusätzliche Maßnahmen entfallen können, was eine besonders kostengünstige Werkzeugmaschine 1 schafft.

Die zweigeteilte Abtrennung 10 schießt an beiden Seitenflächen 18 des Schlittens 5 an, um im Bereich des Schlittens 5 für eine schmutzdichte Trennung des Arbeitsraums von anderen Teilen der Werkzeugmaschine 1 sorgen zu können.

Für eine kompakte Bauform der Abtrennung 10 wird diese aus mindestens zwei teleskopartig zusammenhängenden Abtrennplatten 19 und 20 gebildet. Für eine Führung der Abtrennplatten 19 und 20 ist an der vordersten Abtrennplatte 19 der Bügel zum Einhängen in die Schlittenführung 4 vorgesehen. Die äußerste Abtrennplatte 20 ist am Gestell 21 der Werkzeugmaschine 1 befestigt und somit feststehend. Die anderen Abtrennplatten 19 etc. verschieben sich nun je nach Bedarf gegenüber dieser äußersten Abtrennplatte 20 teleskopartig hin und her. Um die Abtrennplatten 19 und 20 gegenüber einem Kippen zu sichern, sind diese in eine Führungsschiene 22 eingesetzt. Die Abtrennplatten 19 und 20 gleiten nun in dieser von der Führungsschiene 22 gebildeten Plattenführung 23, was konstruktiv einfach eine sichere Bewegung der Abtrennung 10 entlang der Schlittenführung ermöglichen kann.

Im Allgemeinen wird erwähnt, dass jeglicher Verlauf der Schlittenführung 4 vorstellbar ist. Lineare bzw. geradlinige sowie auch krummlinige Verläufe sind denkbar. Außerdem kann die Abtrennung 10 im Öffnungsbereich eine Dichtung 24 aufweisen, um damit höchsten Dichtigkeitsanforderungen entsprechen zu können.

## Patentansprüche

1. Werkzeugmaschine zur Bearbeitung eines Werkstücks (6) mit einer Schlittenführung (4), mit einem an der Schlittenführung (4) geführten Schlitten (5), der einen Werkzeughalter (7) zur Aufnahme eines Werkzeugs (9) für die Bearbeitung des Werkstücks (6) aufweist, mit einem Werkzeugwechsler (14) zum Ein- bzw. Auswechseln von Werkzeugen (9, 11) am Werkzeughalter (7) und mit einem zur wenigstens teilweisen Aufnahme des zu bearbeitenden Werkstücks (6) vorgesehenen Arbeitsraum (2), der wenigstens teilweise von einer schmutzdichten Abtrennung (10) begrenzt wird, wobei die Abtrennung (10) für ein Ein- bzw. Auswechseln von Werkzeugen (9, 11) von einer Schließ- in eine Offenstellung (12, 13) verschiebbar gelagert ist, **dadurch gekennzeichnet, dass** die Abtrennung (10) zum Einnehmen seiner Schließ- oder Offenstellung (12, 13) an der Schlittenführung (4) verschiebbar gelagert ist.

2. Werkzeugmaschine nach Anspruch 1, **dadurch gekennzeichnet, dass** die Abtrennung (10) in ihrer Schließstellung (12) wenigstens teilweise am Schlitten (5) anschließt.

3. Werkzeugmaschine nach Anspruch 1 oder 2, **dadurch gekennzeichnet, dass** die Abtrennung (10) am Schlitten (5) über ein längenverstellbares Kopplungsteil (16) zum Einnehmen der Schließ- oder Offenstellung (12, 13) befestigt ist.

4. Werkzeugmaschine nach Anspruch 3, **dadurch gekennzeichnet, dass** das Kopplungsteil (16) als Zylinder (25) ausgeführt ist, wobei das Zylindergehäuse (26) am Schlitten (5) und die Kolbenstange (17) an der Abtrennung (10) befestigt sind.

5. Werkzeugmaschine nach einem der Ansprüche 1 bis 4, **dadurch gekennzeichnet, dass** die Abtrennung (10) mehrere teleskopartig zusammenhängende Abtrennplatten (19, 20) aufweist, von denen wenigstens die dem Schlitten (5) nächste Abtrennplatte (19) in der Schlittenführung (4) eingehängt verschiebbar gelagert ist.

6. Werkzeugmaschine nach einem der Ansprüche 1 bis 5, **dadurch gekennzeichnet, dass** die wenigstens zweigeteilte Abtrennung (10) beiderseits des Schlittens (5) verschiebbar gelagert ist.

## Claims

1. A machine tool for machining a workpiece (6), comprising a carriage guide (4), a carriage (5) guided on the carriage guide (4) having a tool holder (7) for accommodating a tool (9) for machining the workpiece (6), a tool exchanger (14) for loading and exchanging tools (9, 11) on the tool holder (7), and a working chamber (2) which is provided for receiving the workpiece (6) to be processed at least in part and is limited at least partly by a dirt-proof partition (10), wherein the partition (10) is mounted to be shiftable from a closing position to an opening position (12, 13) for loading and exchanging tools (9, 11), **characterized in that** the partition (10) is shiftably mounted for assuming its closing or opening position (12, 13) on the carriage guide (4).

2. A machine tool according to claim 1, **characterized in that** the partition (10) is at least partly adjacent to the carriage (5) in its closing position (12).

3. A machine tool according to claim 1 or 2, **characterized in that** the partition (10) is fixed to the carriage (5) via a length-adjustable coupling part (16) for assuming the closing or opening position (12, 13).

4. A machine tool according to claim 3, **characterized in that** the coupling part (16) is arranged as a cylinder (25), wherein the cylinder housing (26) is fixed to the carriage (5) and the piston rod (17) to the partition (10).

5. A machine tool according to one of the claims 1 to 4, **characterized in that** the partition (10) comprises several partition plates (19, 20) which are connected in a telescopic fashion and of which at least the partition plate (19) closest to the carriage (5) is shiftably mounted in a suspended manner in the carriage guide (4).

6. A machine tool according to one of the claims 1 to 5, **characterized in that** the at least bipartite partition (10) is shiftably mounted on either side of the carriage (5).

## Revendications

1. Machine-outil pour l'usinage d'une pièce d'oeuvre (6) avec un guidage de chariot (4), avec un chariot (5) guidé sur le guidage de chariot (4), qui présente un porte-outil (7) destiné à recevoir un outil (9) pour l'usinage de la pièce d'oeuvre (6), avec un changeur d'outil (14) pour mettre en place et retirer des outils (9, 11) sur le porte-outil (7) et avec un espace de travail (2) prévu pour recevoir au moins partiellement la pièce d'oeuvre (6) à usiner, qui est délimité au moins partiellement par une séparation (10) étanche aux impuretés, dans laquelle la séparation (10) est supportée en vue de la mise en place et du retrait d'outils (9, 11) de façon à effectuer une translation d'une position fermée à une position ouverte (12, 13), **caractérisée en ce que** la séparation (10) est supportée sur le guidage de chariot (4) avec possibilité de translation pour prendre sa position fermée ou ouverte (12, 13).

2. Machine-outil selon la revendication 1, **caractérisée en ce que** la séparation (10) dans sa position fermée (12) se raccorde au moins partiellement au chariot (5).

3. Machine-outil selon la revendication 1 ou 2, **caractérisée en ce que** la séparation (10) est fixée au chariot (5) par un élément de couplage (16) réglable sur la longueur pour prendre la position de fermeture ou d'ouverture (12, 13).

4. Machine-outil selon la revendication 3, **caractérisée en ce que** l'élément de couplage (16) est réalisé comme un cylindre (25), le corps du cylindre (26) étant fixé sur le chariot (5) et la tige du piston (17) sur la séparation (10).

5. Machine-outil selon l'une des revendications 1 à 4, **caractérisée en ce que** la séparation (10) présente plusieurs panneaux de séparation (19, 20) reliés entre eux de façon télescopique, parmi lesquels au moins le panneau (19) le plus proche du chariot (5) est accroché avec possibilité de translation dans le guidage de chariot (4).

6. Machine-outil selon l'une des revendications 1 à 5, **caractérisée en ce que** la séparation (10) partagée au moins en deux est supportée avec possibilité de translation de part et d'autre du chariot (5).
